# EUROPÄISCHE PATENTANMELDUNG

(11) **EP 1 161 121 A2**
(43) Veröffentlichungstag der Anmeldung: **05.12.2001**
(21) Anmeldenummer: 01113137.2
(22) Anmeldetag: 30.05.2001
(51) Int. Cl.: H05B 33/08

(54) **Beleuchtungseinrichtung für ein Kraftfahrzeug**

(30) Priorität: 02.06.2000 DE 10027478
(71) Anmelder: Hella KG Hueck & Co., 59552 Lippstadt (DE)
(72) Erfinder: Helle, Hans-Michael, 59557 Lippstadt (DE); Möller, Stefan, 59557 Lippstadt (DE); Hinderlich, Andreas, 58739 Wickede (Ruhr) (DE)

(57) **Zusammenfassung**

Die vorliegende Erfindung betrifft eine Beleuchtungseinrichtung (1) für ein Kraftfahrzeug, mit Leuchtdioden (2), die über eine Ansteuerschaltung (4) am Bordnetz betreibbar und auf unterschiedliche Helligkeiten einstellbar sind. Um die Lebensdauer der Leuchtdioden (2) zu erhöhen und einen größeren Einstellbereich bei der Helligkeitseinstellung zur Verfügung zu stellen, schlägt die Erfindung vor, daß die Ansteuerschaltung einen Pulsgenerator (4) aufweist zur Ansteuerung der LED (2) mit getaktetem Strom, wobei das Puls- Pausenverhältnis unterschiedlich vorgebbar ist zur Einstellung der Helligkeit.

## Beschreibung

Die vorliegende Erfindung betrifft eine Beleuchtungseinrichtung für ein Kraftfahrzeug, mit Leuchtdioden (LED) die über eine Ansteuerschaltung am Bordnetz betreibbar und auf unterschiedliche Helligkeiten einstellbar sind.

Bei Signalleuchten von Kraftfahrzeugen, wie Brems-, Schlußund Blinklichtern, werden die bislang verwendeten Glühlampen zunehmend durch Leuchtdioden (LED) ersetzt. Dies bezieht sich ebenfalls auf solche Beleuchtungsanordnungen, deren Lampen in unterschiedlichen Betriebszuständen mit unterschiedlichen Helligkeiten betrieben werden, d. h. je nach Betriebszustand einen kleineren oder größeren Lichtstrom abgeben.

Am Bordspannungsnetz von in der Regel 12 V oder 24 V müssen LED-Anordnungen mit einer Strombegrenzung versehen werden. In der Regel werden hierzu in der Ansteuerschaltung Konstantstromquellenschaltungen vorgesehen, welche auch bei schwankender Bordspannung, beispielsweise im Bereich von 9 - 16 V einen konstanten LED-Strom einprägen. Zur Helligkeitseinstellung von LED-Anordnungen, um diese z. B. wahlweise als Brems- oder Schlußlicht zu betreiben, ist ausweislich der DE 197 34 750 A1 bereits vorgeschlagen worden, diese durch Spannungsteilung von einem Konstantstromregler wahlweise mit zwei unterschiedlich hohen Strompegeln zu versorgen. Für die Bremslichtfunktion wird dabei im Verhältnis zur Rücklichtfunktion lediglich ein höherer Betriebstrom eingeprägt, wodurch kurzfristig die Helligkeit der LED erhöht wird. Die hierzu erforderliche Schaltung hat zwar den Vorteil, daß sie relativ einfach und kostengünstig aufgebaut sein kann und auf diese Weise tatsächlich unterschiedliche Lichtleistungen für die unterschiedlichen Funktionen einstellbar sind. Nachteilig ist daran jedoch, daß die Helligkeit von Leuchtdioden durch Veränderung des Betriebsstroms im Vergleich zu konventionellen Glühlampen lediglich in einem relativ kleinen Bereich einstellbar ist. Außerdem kann die Lebensdauer von LED verringert werden, wenn sie außerhalb ihres optimalen Arbeitspunkts, beispielsweise mit erhöhtem Strom für eine höhere Lichtabgabe betrieben werden.

Angesichts dessen stellt sich der vorliegenden Erfindung die Aufgabe, eine Beleuchtungseinrichtung der eingangs genannten Art zur Verfügung zu stellen, bei der die Helligkeit der Leuchtdioden in einem breiteren Einstellbereich möglich ist, ohne die Lebensdauer zu beeinträchtigen.

Zur Lösung dieser Aufgabenstellung schlägt die Erfindung vor, daß die Ansteuerung einen Pulsgenerator aufweist zur Ansteuerung der LED mit getaktetem Strom, wobei das Puls-Pausenverhältnis unterschiedlich vorgebbar ist zur Einstellung der Helligkeit.

Bei der erfindungsgemäßen Beleuchtungseinrichtung werden die Leuchtdioden nicht, wie im Stand der Technik, mit zeitlich gleichbleibendem Strom versorgt, sondern von einem Impulsgenerator mit hoher Frequenz ein- und ausgeschaltet. Die Einstellung der Helligkeit erfolgt dadurch, daß das Puls-Pausenverhältnis (Tastverhältnis) verändert wird. Dabei entspricht eine Verlängerung der relativen Pulsdauer im zeitlichen Mittel einer längeren Einschaltdauer der LED, d. h. einer größeren Helligkeit, bzw. umgekehrt eine Verringerung der Pulsbreite einer geringeren Helligkeit, wobei der abgestrahlte Lichtstrom annähernd proportional ist zum linearen Mittelwert des Stromes, der durch das Puls-Pausenverhältnis bestimmt wird.

Ein ganz wesentlicher Vorteil der Erfindung besteht darin, daß die Leuchtdioden während der Pulsdauer jeweils mit optimalem Betriebsstrom angesteuert werden können, d. h. sie können auch dann mit geringer Toleranz im Arbeitspunkt betrieben werden, wenn durch ein geringes Puls-Pausenverhältnis im zeitlichen Mittel ein kleiner Strom eingestellt wird. Bevorzugt wird ein über die Klemmenspannung erfindungsgemäß gepulster bzw. getakteter konstanter Betriebsstrom über Konstantstromquellen eingeprägt, welche Abweichungen aufgrund von Temperaturschwankungen und Spannungsschwankungen im Bordnetz ausgleichen. Dadurch wird die maximale Lebensdauer der LED unabhängig vom eingestellten Lichtstrom voll ausgenutzt.

Als weiterer Vorteil gegenüber der im Stand der Technik bekannten Helligkeitseinstellung durch Veränderung des Betriebsstroms kann bei der erfindungsgemäßen Beleuchtungseinrichtung der Lichtstrom stufenlos zwischen 0 und 100 % variiert werden. Aufgrund der vorerwähnten, nahezu linearen Abhängigkeit entspricht 0 % dem ausgeschalteten Zustand, 100 % dem Einschaltzustand mit Dauerstrom, und Zwischenzustände, wie beispielsweise 50 % Pulsverhältnis einer relativen Helligkeit von ebenfalls etwa 50 %. Dadurch, daß der Lichtstrom und damit die Helligkeit in weiten Grenzen einstellbar ist, können unterschiedlich Lichtfunktionen bei einem Kraftfahrzeug, beispielweise Bremslicht und Schlußlicht und gegebenenfalls Nebelschlußlicht mit denselben Leuchtdioden dargestellt werden.

Bevorzugt werden die LED während der Pulsdauer mit Konstantstrom aus einer Konstantstromquelle betrieben, welche durch eine Konstantstromquellenschaltung gebildet wird, welche in die Ansteuerschaltung integriert ist. Damit ist der optimale Betrieb der LED unabhängig von Spannungs- und Temperaturschwankungen im Arbeitspunkt gewährleistet. Dies kommt einer hohen Lebensdauer zugute. Darüber hinaus erfordert eine derartige Ansteuerschaltung einen geringen Schaltungsaufwand, da eine derartige Konstantstromquellenschaltung sowohl als integrierter Konstantstromregler, als auch mit wenigen diskreten Bauelementen aufgebaut werden kann. Diese Ansteuerschaltung wird erfindungsgemäß durch Taktung der Klemmenspannung im gewünschten Puls- Pausenverhältnis angesteuert.

Der Pulsgenerator kann im Bordnetz vor der eigentlichen Beleuchtungseinrichtung mit den Konstantstromquellen eingegliedert sein, so daß er für eine Taktung der Versorgungsspannung dieser Anordnung sorgt. Alternativ ist es jedoch ebenfalls möglich, daß der Pulsgenerator in die Konstantstromquellenschaltung integriert ist. Bei dieser Schaltungsanordnung bleibt die Versorgungsspannung gleich, wobei die erfindungsgemäße Taktung der Lampen mit der im Impulsbetrieb betriebenen Stromquelle selbst bewerkstelligt wird.

Eine erfindungsgemäße Beleuchtungseinrichtung wird in der Regel aus einer Vielzahl von Leuchtdioden gebildet. Vorteilhaft ist dabei, daß an jeweils eine Konstantstromquellenschaltung jeweils eine Mehrzahl von LED seriell und/oder parallel angeschlossen ist. Jede dieser Stromquellen mit den daran angeschlossenen Leuchtdioden bildet eine separat funktionsfähige Einheit. Diese Anordnung genügt besonders hohen Sicherheitsanforderungen, da beim Ausfall einer Gruppe, beispielweise wenn in einer Serienschaltung eine LED hochohmig wird, die anderen Gruppen nach wie vor betriebsfähig bleiben. Die Parallel- bzw. Serienschaltung der LED-Gruppen kann derart angepaßt werden, daß im Normalbetrieb lediglich geringe Verlustleistungen am Stromregler anfallen.

Die Konstantstromquellenschaltungen werden von dem Pulsgenerator im gewählten Puls- Pausenverhältnis ein- und ausgeschaltet. Dies erfolgt beispielsweise durch Zu- und Abschalten der Klemmenspannung.

Für den Fall, daß zwei verschiedene Lichtfunktionen mit unterschiedlichem Lichtstrom gefordert sind, ist es vorteilhaft, daß der Pulsgenerator zwischen mindestens zwei vorgegebenen Puls- Pausenverhältnissen umschaltbar ist. Diese unterschiedlichen Tastverhältnisse können in der erfindungsgemäßen Steuerschaltung ab Werk fest voreingestellt sein, die bei Bedarf durch die Bedienungsschalter im Kraftfahrzeug aktivierbar sind.

Eine vorteilhafte Weiterbildung der Erfindung sieht vor, daß die Ansteuerschaltung eine Stromüberwachungsschaltung aufweist, die bei Abweichungen vom Konstantstromwert der Konstantstromquellenschaltungen ein Signal abgibt. Dadurch wird eine automatische Diagnoseschaltung realisiert, die ausnutzt, daß durch die Konstantstromquellen ein fester, konstanter Stromwert eingeprägt wird. Wenn dieser Stromwert über bestimmte Grenzwerte im Toleranzbereich ansteigt oder darunter abfällt, ist dies ein sicheres Zeichen dafür, daß Unterbrechungen oder Kurzschlüsse aufgetreten sind, welche die Funktion der Beleuchtungseinrichtung beeinträchtigen können. Das von der Stromüberwachungsschaltung abgegebene Signal kann über entsprechende Anzeigeeinrichtungen angezeigt werden, so daß umgehend Gegenmaßnahmen eingeleitet werden können, beispielsweise ein Austausch der defekten Elemente.

Die Einsatzmöglichkeiten der erfindungsgemäßen Beleuchtungseinrichtung erstrecken sich im wesentlichen auf sämtliche Signal- und Anzeigeleuchten eines Kraftfahrzeugs, die mit unterschiedlichen Helligkeiten betrieben werden sollen. Eine bevorzugte Anwendung ist der Betrieb der Leuchtdioden als kombiniertes Schluß- und Bremslicht bzw. Nebelschlußlicht eines Kraftfahrzeugs. Dabei werden auf die erfindungsgemäße Weise zwei bzw. drei verschiedene Helligkeitsstufen eingestellt.

Die Betriebsfrequenz des Pulsgenerators sollte zweckmäßigerweise oberhalb der Wahrnehmungsschwelle des menschlichen Auges liegen. Bei einer Frequenz von mehr als 50 Hz, dies entspricht einer Periodendauer des Puls- Pausen-Zyklus von 20 ms, wird das von den LED abgestrahlte Licht vom menschlichen Auge als Dauerlicht ohne Flackern wahrgenommen.

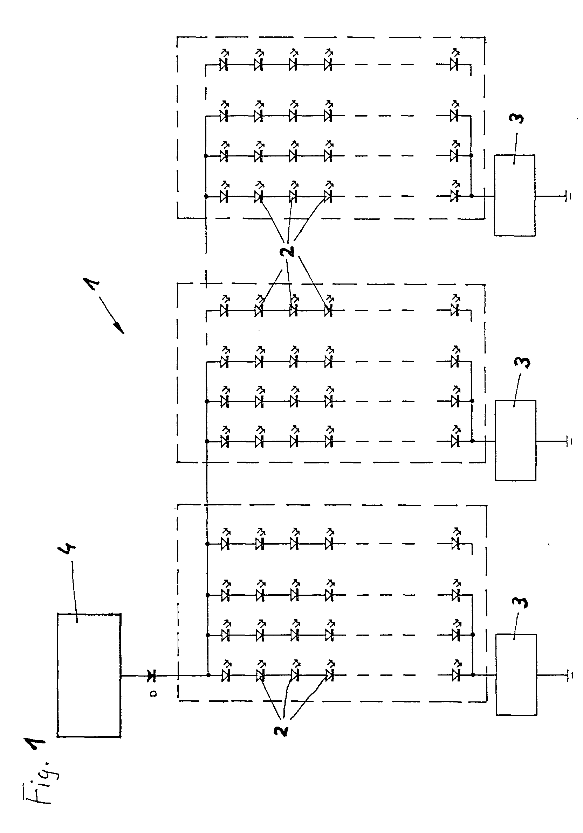

Ein Ausführungsbeispiel einer Beleuchtungseinrichtung gemäß der Erfindung ist schematisch in Form eines Schaltbilds in Figur 1 dargestellt und als Ganzes mit dem Bezugszeichen 1 versehen. Diese weist eine Vielzahl von Leuchtdioden (LED) 2 auf, die jeweils durch Serien- und Parallelschaltung zu Gruppen zusammengefaßt sind, was mit den gestrichelt eingezeichneten Umrandungen angedeutet ist. Jede dieser Gruppen von LED 2 ist über eine Konstantstromquellenschaltung 3 an das Bordnetz eines Kraftfahrzeugs angeschlossen.

Die gesamte Beleuchtungsanordnung 1 samt der in Gruppen angeordneten LED 2 und der Konstantstromschaltungen 3 wird über einen erfindungsgemäßen Pulsgenerator 4 mit gepulster Klemmenspannung angesteuert.

Mit dem Bezugszeichen D ist eine Verpolungsschutzdiode bezeichnet.

Von dem erfindungsgemäßen Pulsgenerator wird die Gesamtheit der in Gruppen angeordneten LED 2 getaktet angesteuert, wobei das Puls- Pausenverhältnis zumindest zwei verschiedene Werte annehmen kann, welche im Mittel unterschiedlichen Lichtströmen der LED 2 entsprechen. Die Frequenz liegt oberhalb von 50 Hz, wodurch das abgegebene Licht vom menschlichen Auge als konstantes Dauerlicht empfunden wird. Die Stromquellenschaltungen 3 sorgen dafür, daß auch bei Temperaturschwankungen und Spannungsschwankungen im Fordnetz beim Betrieb der LED 2 jeweils ein konstanter Strom eingeprägt wird.

Die erfindungsgemäße Impulsschaltung 4 kann weiterhin eine Stromüberwachungsschaltung umfassen. Diese gibt ein Signal ab, wenn der gemessene Gesamtstrom von der Summe der durch die Stromquellenschaltungen 3 eingeprägten Ströme abweicht, was auf einen Defekt in den Stromquellenschaltungen 3 oder bei den LED 2 hindeutet. Dieses Signal kann beispielsweise als optischer oder akustischer Wartungshinweis angezeigt werden.

## Patentansprüche

1. Beleuchtungseinrichtung für ein Kraftfahrzeug, mit Leuchtdioden (LED), die über eine Ansteuerschaltung an einem Bordnetz betreibbar und auf unterschiedliche Helligkeiten einstellbar sind, **dadurch gekennzeichnet, daß** die Ansteuerschaltung einen Pulsgenerator (4) aufweist zur Ansteuerung der LED (2) mit getaktetem Strom, wobei das Puls- Pausenverhältnis unterschiedlich vorgebbar ist zur Einstellung der Helligkeit.

2. Beleuchtungseinrichtung nach Anspruch 1, **dadurch gekennzeichnet, daß** die Ansteuerschaltung mindestens eine Konstantstromquellenschaltung (3) umfaßt.

3. Beleuchtungseinrichtung nach Anspruch 1 oder 2, **dadurch gekennzeichnet, daß** an jeweils eine Konstantstromquellenschaltung (3) jeweils eine Mehrzahl von LED seriell und/oder parallel angeschlossen ist.

4. Beleuchtungseinrichtung nach einem der Ansprüche 1 bis 3, **dadurch gekennzeichnet, daß** der Pulsgenerator (4) im Bordnetz vor der Konstantstromquellenschaltung (3) angeordnet ist.

5. Beleuchtungseinrichtung nach einem der Ansprüche 1 bis 3, **dadurch gekennzeichnet, daß** der Pulsgenerator (4) in die Konstantstromquellenschaltung (3) integriert ist.

6. Beleuchtungseinrichtung nach einem der Ansprüche 1 bis 5, **dadurch gekennzeichnet, daß** die mindestens eine Konstantstromquellenschaltung (3) vom Pulsgenerator (4) geschaltet wird.

7. Beleuchtungseinrichtung nach einem der Ansprüche 1 bis 6, **dadurch gekennzeichnet, daß** der Pulsgenerator (4) zwischen mindestens zwei vorgegebenen Puls-Pausenverhältnissen umschaltbar ist.

8. Beleuchtungseinrichtung nach einem der Ansprüche 1 bis 7, **dadurch gekennzeichnet, daß** die Ansteuerschaltung (4) eine Stromüberwachungsschaltung aufweist, die bei Abweichungen vom Konstantstromwert der Konstantstromquellenschaltungen (3) ein Signal abgibt.

9. Beleuchtungseinrichtung nach einem der Ansprüche 1 bis 8, **dadurch gekennzeichnet, daß** die LED (2) als kombiniertes Schluß-, Brems- und/oder Nebelschlußlicht eines Kraftfahrzeugs betreibbar sind.

10. Beleuchtungseinrichtung nach einem der Ansprüche 1 bis 9, **dadurch gekennzeichnet, daß** die Betriebsfrequenz des Pulsgenerators (4) oberhalb der Wahrnehmungsschwelle des menschlichen Auges liegt.

11. Beleuchtungseinrichtung nach Anspruch 10, **dadurch gekennzeichnet, daß** die Betriebsfrequenz oberhalb von 50 Hz liegt.
